(19) Europäisches Patentamt

European Patent Office

Office européen des brevets

(11) **EP 0 747 721 B1**

(12) **FASCICULE DE BREVET EUROPEEN**

(45) Date de publication et mention
de la délivrance du brevet:
**05.09.2001 Bulletin 2001/36**

(51) Int Cl.[7]: **G01S 5/14**, G01C 15/00

(21) Numéro de dépôt: **96401195.1**

(22) Date de dépôt: **05.06.1996**

(54) **Procédé et dispositif pour la détermination précise d'un point masqué par radiolocalisation satellitaire**

Verfahren und Anordnung zur genauen Ortsbestimmung eines elektromagnetisch abgeschirmten Ortes mittels Satelliten

Method and device for precisely determining an electromagnetically shielded point by position measuring with satellites

(84) Etats contractants désignés:
**BE DE FR GB NL**

(30) Priorité: **06.06.1995 FR 9506646**

(43) Date de publication de la demande:
**11.12.1996 Bulletin 1996/50**

(73) Titulaire: **DASSAULT SERCEL
Navigation-Positionnement
44474 Carquefou Cedex (FR)**

(72) Inventeurs:
• **Gounon, René-Pierre
44690 Chateau-Thebaud (FR)**

• **Priou, Michel-Francis
44450 Saint Julien de Concelles (FR)**

(74) Mandataire: **Martin, Jean-Jacques
Cabinet Régimbeau
20, rue de Chazelles
75847 Paris cedex 17 (FR)**

(56) Documents cités:
**EP-A- 0 420 338      EP-A- 0 481 307
EP-A- 0 588 598      WO-A-90/00718
WO-A-90/00719      US-A- 5 379 045**

• **PATENT ABSTRACTS OF JAPAN vol. 96, no. 2, 29 Février 1996 & JP-A-07 260480 (SOKKIA CO LTD), 13 Octobre 1995,**

**Description**

La présente invention est relative aux procédés et systèmes pour la localisation radio-satellitaire de points à la surface de la terre.

L'utilisation des signaux radioélectriques transmis par les satellites a trouvé, depuis une dizaine d'années, un vaste champ d'applications dans les domaines de la navigation, de la géodésie et de la topographie.

Particulièrement, le système GPS (Global Positionning System selon la terminologie anglosaxonne), mondialement utilisé, permet désormais d'accéder, en temps réel, à des précisions centimétriques pour la détermination de points à la surface du globe. Ces grandes précisions sont indispensables pour les topographes dans un grand nombre d'applications de positionnement terrestre.

Pour une présentation générale d'application des systèmes GPS, on pourra avantageusement se référer aux documents suivants : EP-A-0 481 307, EP-A-0 420 338 et WO-A-90 00718.

Les techniques mises en oeuvre pour parvenir à ce résultat sont dites de "cinématique temps réel". Elles sont utilisées depuis les années 1993-94 et illustrées en particulier dans le brevet français FR-A-2 715 230.

On pourra également, pour une présentation générale de ces techniques, se référer à la publication " GPS Vermessung mit Real-Time-Kinematic Technische Untersicht " - VERWENDUNGEN & TECHNISCHE ANGABEN, B 1-7, TRIMBLE-1993.

A l'aide de ces techniques, il est possible, sous la seule contrainte de recevoir simultanément les signaux en provenance d'au moins cinq satellites, d'assurer un travail de qualité et d'atteindre des précisions de détermination de l'ordre du centimètre pour le lever ou l'implantation de points. Par conséquent, les techniques de radiolocalisation satellitaire sont, dans de nombreuses applications, substituées aux techniques de localisation antérieures qui utilisaient des appareillages optiques pour la mesure d'angles ou de distances (distancemètre et tachéomètre).

Toutefois, certains points au sol ne sont pas toujours suffisamment dégagés ou convenablement situés pour permettre une réception correcte des signaux en provenance des satellites. Ceci constitue un frein au développement des techniques de radiolocalisation satellitaire et notamment à leur utilisation par les géomètres pour leurs opérations les plus courantes.

Cette limitation apparaît clairement lorsqu'il s'agit de déterminer la position d'un point sous couvert végétal, à l'aplomb d'un mur, sous un pont ou une trémie, et de façon plus générale, dans les environnements peu propices à la réception correcte des signaux satellitaires.

La solution apportée à ce jour à ce type de situation consiste à déterminer, avec toute la précision requise, les coordonnées d'un ou plusieurs points dits "intermédiaires" situés dans un environnement dégagé, à proximité du point objectif masqué, puis à utiliser des techniques classiques de mesure d'angles et de distances (chaîne d'arpenteur, tachéomètre, distancemètre, etc) pour situer le point objectif par rapport à ces points intermédiaires.

Cette association de techniques disparates rend les matériels lourds, les procédures complexes et les risques d'erreurs importants ; en pratique, elle limite considérablement l'intérêt que présente l'utilisation des techniques satellitaires, puisque de toute façon les techniques classiques et les matériels associés restent indispensables dans de très nombreuses applications.

Un but de l'invention est d'accroître considérablement le champ d'application des techniques radio-satellitaires. Elle propose à cet effet une méthode et un système de radiolocalisation basées sur l'exploitation des signaux satellitaires, qui permettent d'accéder à la position précise des points masqués sur lesquels la réception des signaux radio-satellitaires est impossible ou insuffisante.

Selon le procédé proposé par l'invention :

- on positionne l'antenne d'un mobile de radiolocalisation évoluant librement à proximité du point masqué sur une pluralité de points quelconques où la réception des signaux émis par les satellites est suffisante,
- on détermine par radiolocalisation les coordonnées de ces points et
- on détermine en fonction de ces coordonnées les coordonnées du point masqué,

caractérisé en ce que, à cet effet,

- on dispose un émetteur pseudolite sur le point masqué,
- on mesure en chacun des points où l'antenne est successivement positionnée la phase du signal émis par l'émetteur pseudolite et reçu en ces points par ladite antenne,
- pour chaque point où l'antenne est successivement positionnée, on détermine, en fonction de la mesure de phase du signal pseudolite et des coordonnées dudit point ($P_1$), les paramètres d'une équation linéaire reliant les coordonnées du point masqué et le déphasage entre l'émetteur pseudolite (1) et le mobile de radiolocalisation en un instant de référence,
- et, lorsque l'on dispose d'un nombre de mesures suffisant, on détermine les coordonnées du point masqué en inversant ces équations.

Ainsi selon l'invention, on exploite les mesures de phase du signal émis par l'émetteur pseudolite et les mesures issues des satellites permettant de calculer les positions successives du mobile localisateur, pour calculer les coordonnées du point masqué.

On rappelle ici qu'un "pseudolite" ou "pseudo-satellite" est une unité d'émission au sol qui émet des signaux radioélectriques à codage pseudo-aléatoire qui sont analogues à ceux émis par les satellites du système de radiolocalisation utilisé (satellites de la constellation NAVSTAR pour les systèmes GPS).

Les pseudolites sont classiquement connus de l'Homme du Métier.

Ils sont principalement utilisés dans le domaine de l'aéronautique pour le guidage d'avions par rapport à des aires d'atterrissage ou pour la levée d'ambiguités d'entiers de phase.

On pourra avantageusement à cet égard se référer aux brevets US-5.177.489 et US-5.311.194 et aux publications suivantes :

- Real time flight testing using integrity beacons for GPS, category III Precison Landing, CLARK COHEN and al.
- Revue Navigation Vol. 41 N_2 - Summer 94 - Institute of Navigation,
- Integrity Monitoring for precision approach using Kinematic GPS and a ground-based pseudolite - Boris PERVAN and al. - Revue Navigation - Vol. 41 n_2 - Summer 94.

Selon l'invention, il est également proposé un dispositif de localisation radio-satellitaire de points à la surface de la terre comportant un mobile de radiolocalisation qui comprend une antenne pour la réception des signaux radioélectriques émis en direction de la terre par une constellation de satellites et une unité pour le traitement de ces signaux, ce dispositif étant caractérisé en ce qu'il comporte en outre un émetteur pseudolite destiné à être placé sur un point masqué où la réception des signaux émis par les satellites n'est pas suffisante, l'un des canaux du mobile de radiolocalisation, habituellement dédié à la réception des signaux radiosatellitaires, étant affecté à la réception du signal émis par l'émetteur peusdolite, ce dispositif comportant des moyens de traitement permettant de déterminer les coordonnées du point masqué en fonction d'une part de la mesure de la phase du signal émis par l'émetteur peusdolite en différents points où l'antenne est successivement positionnée et d'autre part des coordonnées de ces points déterminées par l'unité, ces moyens de traitement comportant :

- des moyens de calcul pour déterminer, pour chaque point où l'antenne est successivement positionnée, les paramètres d'une équation linéaire reliant les coordonnées du point masqué et le déphasage entre l'émetteur peusdolite et le mobile de radio-localisation en un instant de référence, ces paramètres étant fonction de la mesure de la phase du signal pseudolite et des coordonnées dudit point, et
- des moyens de calcul pour résoudre les équations linéaires ainsi obtenues.

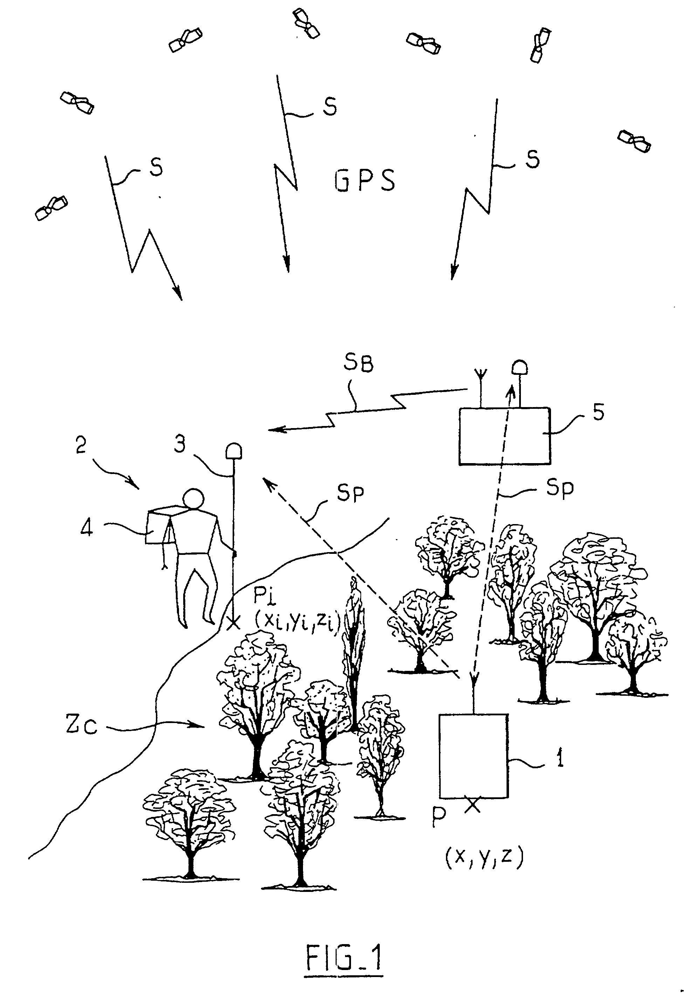

D'autres caractéristiques et avantages ressortiront encore de la description qui suit. Cette description est purement illustrative et non limitative. Elle doit être lue en regard du dessin unique annexé sur lequel on a illustré schématiquement le principe de la méthode et du système proposé par l'invention.

Sur cette figure, on a représenté un point masqué P dont on cherche à relever les coordonnées, qui est situé dans une zone couverte Zc dans laquelle les signaux S radio-satellitaires ne sont pas convenablement reçus.

Le dispositif utilisé pour relever les coordonnées XYZ de ce point P comporte un émetteur pseudolite 1 et un mobile 2 de radiolocalisation G.P.S.

Le pseudolite 1 rayonne à une très faible puissance (quelques microwatts), à la fréquence GPS de 1,57542 GHz (L1), ou à une fréquence légèrement décalée, un signal $S_P$ modulé en phase par un code pseudoaléatoire dont le format est celui des codes GPS.

Le mobile 2 comporte une antenne de réception 3 montée sur une canne tenue par l'opérateur et une unité de traitement 4 portée par l'opérateur et reliée à ladite antenne 3.

L'unité 4 traite les signaux radioélectriques reçus par l'antenne 3 en provenance des satellites GPS, du pseudolite 1, ainsi que d'une balise 5 de référence qui reçoit également les signaux en provenance des satellites GPS et qui retransmet des signaux de correction différentielle de phase (signaux $S_B$ sur la figure).

Comme on l'aura compris, l'un des canaux du mobile de radiolocalisation 2, habituellement dédié à la réception des signaux radio-satellitaires, est affecté à la réception du signal $S_P$ émis par le pseudolite 1, sorte que l'unité 4 dispose d'une mesure de phase qui est fonction de la distance entre le récepteur mobile que constitue le mobile 2 et l'émetteur pseudolite 1.

Les traitements que l'unité 4 réalise sur les signaux GPS sont des traitements cinématiques en temps réels, de sorte que la position de l'antenne est connue avec une précision centimétrique. Ces traitements sont par exemple des traitements du type de ceux décrits dans la demande de brevet français déposée par la demanderesse sous le numéro 94-00.523, à laquelle on pourra avantageusement se reporter.

L'opérateur déplace l'antenne 3 du récepteur mobile 2 sur une succession de points $P_i$ où les signaux radio-satellitaires S sont convenablement reçus.

En chacun de ces différents points $P_i$, le récepteur 2 détermine les coordonnées $X_i$, $Y_i$, $Z_i$ du point $P_i$ sur lequel il se trouve et réalise une mesure de phase $R_i$ sur le signal émis par le pseudolite 1 et reçu par le récepteur GPS 2.

La connaissance des coordonnées d'au moins quatre points $P_i$ et des mesures de phase $R_i$ correspondantes permet à l'unité 4 de déterminer les coordonnées X, Y et Z du point P.

Les traitements mis en oeuvre à cet effet par l'unité 4 vont maintenant être explicités.

Au point $P_0$, de coordonnées $X_0$, $Y_0$, $Z_0$, la mesure de phase est :

$$R_0 = D_0 + H_0,$$

où $D_0$ est une valeur de phase proportionnelle à la distance entre le pseudolite 1 et le récepteur 2 et où $H_0$ est le déphasage d'horloge entre le pseudolite 1 et le récepteur 2.

En un temps $T_1$ ultérieur, l'opérateur s'est déplacé en un point $P_1$ de coordonnées $X_1$, $Y_1$, $Z_1$ et la mesure de phase que réalise le récepteur 2 est :

$$R_1 = D_1 + H_0 + \Delta H_1,$$

où $D_1$ est la nouvelle valeur de phase correspondant à la distance entre le pseudolite 1 et le récepteur 2 et où $\Delta H1$ est l'évolution relative des horloges du récepteur 2 et du pseudolite 1 entre $T_0$ et $T_1$.

En un temps $T_2$, l'opérateur s'est déplacé en un point $P_2$ de coordonnées X2, Y2, Z2. La mesure de phase qu'il réalise est :

$$R_2 = D_2 + H_0 + \Delta H_1 + \Delta H_2,$$

où $D_2$ est la phase qui correspond à la distance entre le récepteur 2 et le pseudolite 1 en ce point $P_2$, et où $\Delta H_2$ est l'évolution relative des horloges du récepteur 2 et du pseudolite 1 entre $T_1$ et $T_2$.

Il poursuit ses mesures sur plusieurs points $P_i$, la mesure de phase en un point $P_i$ donné étant :

$$R_i = D_i + H_0 + \sum_{j=i}^{i} \Delta Hi$$

où $D_i$ est la phase qui correspond à la distance entre le récepteur 2 et le pseudolite 1 en ce point $P_i$, et où $\Delta Hi$ est l'évolution relative des horloges du récepteur 2 et du pseudolite 1 entre $T_{i-1}$ et $T_i$.

Les évolutions $\Delta Hi$ sont calculées par l'unité 4 par soustraction des évolutions d'horloge $\Delta Hi_{(2-5)}$ entre le récepteur 2 et la balise 5 et $\Delta Hi_{(5-1)}$ entre la balise 5 et le pseudolite 1.

La valeur de l'évolution $\Delta Hi_{(2-5)}$ est calculée par l'unité 4 et est un sous-produit de la détermination des coordonnées du point $P_i$.

La deuxième de ces évolutions $\Delta Hi_{(5-1)}$ peut être connue de deux façons :

- Si la balise 5 se trouve en vue du pseudolite 1, on peut lui affecter de la même façon que pour le récepteur 2 un canal spécifique pour la réception des signaux émis du pseudolite 1. La distance entre la balise 5 et le pseudolite 1 étant constante, l'évolution de phase mesurée par la balise 5 sur le signal émis du pseudolite 1 correspond à l'évolution relative des horloges des deux éléments. Cette information est transmise par la balise 5 au récepteur 2 ;
- Si la balise 5 se trouve hors de portée du pseudolite 1, la solution consiste à asservir l'évolution de l'horloge du pseudolite 1 à celle de la balise 5. De la sorte, les termes $\Delta Hi_{(2-5)}$ sont tous nuls et il reste $\Delta Hi_{(1-2)} = \Delta Hi_{(1-5)}$. Etant situé à proximité du récepteur mobile 2, le pseudolite 1 reçoit les émissions de la balise 5 de la même façon que le mobile 2. Il suffit alors, pour réaliser l'asservissement, de moduler la porteuse émise par la balise 5 par une fréquence sous multiple de son horloge, et de doter le pseudolite 1 des moyens de réception et de décodage de cette information. Les techniques d'asservissement d'une horloge sur une autre par liaison herzienne sont parfaitemment connues de l'Homme du Métier.

Chacune de ces deux solutions présente ses avantages propres. La première est rigoureuse, mais nécessite l'implantation de la balise 5 en vue du pseudolite 1, ce qui représente une contrainte opérationnelle. La seconde libère l'opérateur de cette contrainte mais au prix d'une petite dégradation de la précision, fonction de la qualité de la réalisation de l'asservissement.

Quoi qu'il en soit, l'unité 4 mémorise les valeurs successives des évolutions $\Delta Hj$ et calcule en chaque point $P_i$ ($i^{ème}$ point) une valeur de phase $R_i$ donnée par

$$R'_i = R_i - \sum_{j=1}^{i} \Delta H_j$$

c'est à dire :

$$R'_i = D_i + H_0.$$

Cette valeur $R'_i$ vérifie l'équation linéaire suivante:

$$(1) \qquad R'^2_i - R_0^2 + Ki = aiX + biY + ciZ + diH_0$$

où
ai, bi, ci, di et Ki sont des paramètres que l'unité 4 calcule et qui sont fonction des coordonnées des points $P_i$ et $P_0$.

Entre $T_i$ et $T_0$ on a en effet :

$$D_i^2 - D_0^2 + X_0^2 - X_i^2 + Y_0^2 - Y_i^2 + Z_0^2 - Z_i^2$$

$$= 2(X_i - X_0)X + 2(Y_i - Y_0)Y + 2(Z_i + Z_0)Z,$$

et on a également :

$$D_i^2 - D_0^2 = R'^2_i - 2H_0 R'_i + H_0^2 - (R_0^2 - 2H_0 R_0 + H_0^2)$$

$$= R'^2_i - R_0^2 - 2(R'_i - R_0)H_0$$

On retrouve donc l'équation (1) avec ai, bi, ci, di respectivement égaux à

$$2(X_i - X_0),\ 2(Y_i - Y_0),\ 2(Z_i - Z_0),\ 2(R'_i - R_0),$$

Ki étant égal à $X_0^2 - X_i^2 + Y_0^2 - Y_i^2 + Z_0^2 - Z_i^2$.

Comme on l'aura compris, l'équation (1) est une expression linéaire en X, Y, Z, $H_0$ qu'il est possible de résoudre dès que l'on dispose des mesures en quatre points $P_i$ distincts du point $P_0$.

En pratique, on utilise la méthode des moindres carrés et on réalise sur les valeurs X, Y, Z successivement déterminées pour un même point P un test de stabilité et l'on arrête les mesures lorsque la stabilité des valeurs de ces coordonnées X, Y, Z est satisfaisante.

Par exemple, la solution obtenue est validée lorsque le bruit des trois inconnues X, Y, Z est inférieur à un seuil prédéterminé fonction de la précision requise pour le travail à effectuer (en pratique 1 à quelques cm).

Le temps de convergence de la solution est fonction de la géométrie d'observation du pseudolite et varie de 1 à quelques minutes.

Comme on l'aura compris, le procédé et le dispositif qui viennent d'être décrits permettent de déterminer la position d'un point sur lequel la réception des signaux satellitaires est impossible, en ne mettant en oeuvre que des techniques de radiolocalisation.

Toutes les mesures sont faites en un seul point (à savoir le centre de phase de l'antenne 3), ce qui élimine les problèmes de raccordement entre mesures issues de différents systèmes ou capteurs.

On notera que les traitements qui viennent d'être décrits s'effectuent à partir d'observations sur les variations de phase des signaux reçus, et non sur la phase de ces signaux, ce qui élimine les problèmes liés à la détermination des entiers de phase.

Sur le plan opérationnel, le procédé et le système conforme à l'invention présentent de nombreux avantages.

La détermination du point objectif peut se faire au cours d'une libre évolution du récepteur mobile, sans aucune contrainte de positionnement initial ou en des points relais.

La détermination des coordonnées du point objectif peut se faire simultanément à un levé ou une implantation classique en d'autres points.

Le procédé peut être activé ou interrompu sans perturber le fonctionnement normal de la cinématique temps réel en ces points.

La liaison entre l'émetteur pseudolite et le récepteur mobile peut être momentanément interrompue, par exemple par masquage, sans qu'il n'en résulte aucune conséquence sur la qualité du résultat.

Le système accumule et traite les mesures de temps nécessaire à l'obtention d'un résultat selon des critères de précision qui ont été préalablement déterminés par l'opérateur.

Lorsque la qualité requise est obtenue, le calcul se termine automatiquement et l'opérateur en est averti par l'unité 4.

On notera également que le système proposé par l'invention est d'une grande simplicité de manipulation : hormi la mise en place de l'émetteur pseudolite, aucune autre manipulation n'est nécessaire.

**Revendications**

**1.** Procédé de localisation radio-satellitaire de points à la surface de la terre, dans lequel, pour localiser un point masqué où la réception des signaux émis par les satellites n'est pas suffisante,

- on positionne l'antenne (3) d'un mobile de radiolocalisation évoluant librement à proximité du point masqué sur une pluralité de points quelconques ($P_i$) où la réception des signaux émis par les satellites est suffisante,
- on détermine par radiolocalisation les coordonnées de ces points ($P_1$) et
- on détermine en fonction de ces coordonnées les coordonnées du point masqué (P),

**caractérisé en ce que**, à cet effet,

- on dispose un émetteur pseudolite (1) sur le point masqué (P),
- on mesure en chacun des points ($P_1$) où l'antenne (3) est successivement positionnée la phase du signal émis par l'émetteur pseudolite (1) et reçu en ces points par ladite antenne (3),
- pour chaque point ($P_i$) où l'antenne (3) est successivement positionnée, on détermine, en fonction de la mesure de phase du signal pseudolite ($S_P$) et des coordonnées dudit point ($P_1$), les paramètres d'une équation linéaire reliant les coordonnées du point masqué (P) et le déphasage entre l'émetteur pseudolite (1) et le mobile de radiolocalisation en un instant ($T_0$) de référence,
- et, lorsque l'on dispose d'un nombre de mesures suffisant, on détermine les coordonnées du point masqué (P) en inversant ces équations.

**2.** Procédé selon la revendication 1, **caractérisé en ce que** pour le $i^{\text{ème}}$ point ($P_1$) où l'antenne (3) est successivement positionnée

- on détermine l'évolution _Hi relative des horloges de l'émetteur pseudolite (1) et d'une unité (4) de traitement du mobile de radiolocalisation, entre ce point ($P_1$) et le point précédent ($P_{1-I}$),
- on calcule la valeur de phase

$$R'_i = R_i - \sum_{j=1}^{i} \Delta Hj$$

où $R_i$ est la mesure de phase du signal pseudolite ($P_S$) en ce point ($P_i$), les valeurs $\Delta Hj$ des évolutions relatives aux points ($P_J$) précédents ayant à cet effet été mémorisées,

- on calcule les paramètres Ki, ai, bi, ci, di de l'équation linéaire suivante :

$$(1) \qquad R'^2_1 - R^2_0 + Ki = aiX + biY + ciZ + diH_0,$$

où X, Y, Z sont les coordonnées du point masqué (P),

$H_0$ est le déphasage entre l'émetteur pseudolite (1) et le mobile de radiolocalisation à l'instant de référence ($T_0$),

ai, bi, ci, di étant respectivement égaux à $2(X_1 - X_0)$, $2(Y_i - Y_0)$, $2(Z_i - Z_0)$, $2(R'_i - R_0)$,

où $X_i$, $Y_i$, $Z_I$ sont les coordonnées du point ($P_1$),

$X_0$, $Y_0$, $Z_0$ les coordonnées du point $P_0$ où se trouve l'antenne (3) à l'instant de référence,

$R_0$ étant la mesure de phase du signal pseudolite à l'instant de référence,

Ki étant égal à $X_0^2 - X_i^2 + Y_0^2 - Y_1^2 + Z_0^2 - Z_i^2$.

3. Procédé selon La revendication 2, **caractérisé en ce que** l'on détermine l'évolution relative des horloges de l'émetteur pseudolite (1) et de l'unité (4) de traitement du mobile de radiolocalisation par soustraction:

- de l'évolution d'horloge entre ladite unité (4) et une balise de référence (5),
- et de l'évolution d'horloge entre cette balise de référence (5) et l'émetteur pseudolite (1).

4. Procédé selon la revendication 3, **caractérisé en ce que** l'évolution d'horloge est mesurée par la balise de référence (5) et retransmise à l'unité mobile (4).

5. Procédé selon la revendication 3, **caractérisé en ce que** l'évolution d'horloge est annulée par asservissement de l'horloge de l'émetteur pseudolite (1) sur celle de la balise de référence (5), cet asservissement utilisant une modulation de la porteuse émise par ladite balise.

6. Procédé selon l'une des revendications précédentes, **caractérisé en ce que** l'on réalise sur les valeurs (X, Y, Z) successivement déterminées pour les coordonnées du point à localiser (P) un test de stabilité, la radiolocalisation étant terminée lorsque la stabilité de ces valeurs est suffisante.

7. Dispositif de localisation radio-satellitaire de points à la surface de la terre comportant un mobile de radiolocalisation (2) qui comprend une antenne (3) pour la réception des signaux radio-électriques (S) émis en direction de la terre par une constellation de satellites (GPS) et une unité (4) pour le traitement de ces signaux, ce dispositif étant **caractérisé en ce qu'**il comporte en outre un émetteur pseudolite (1) destiné à être placé sur un point masqué (P) où la réception des signaux émis par les satellites n'est pas suffisante, l'un des canaux du mobile de radiolocalisation (2), habituellement dédié à la réception des signaux radio-satellitaires (S), étant affecté à la réception du signal ($S_P$) émis par l'émetteur peusdolite (1), ce dispositif comportant des moyens de traitement (4) permettant de déterminer les coordonnées du point masqué (P) en fonction d'une part de la mesure de la phase du signal émis par l'émetteur pseudolite (1) en différents points ($P_1$) où l'antenne (3) est successivement positionnée et d'autre part des coordonnées de ces points ($P_i$) déterminées par l'unité (4), ces moyens de traitement (4) comportant :

- des moyens de calcul pour déterminer, pour chaque point ($P_1$) où l'antenne (3) est successivement positionnée, les paramètres d'une équation linéaire reliant les coordonnées du point masqué (P) et le déphasage entre l'émetteur pseudolite (1) et le mobile de radio-localisation (2) en un instant ($T_o$) de référence, ces paramètres étant fonction de la mesure de la phase du signal pseudolite ($P_S$) et des coordonnées dudit point ($P_i$), et
- des moyens de calcul pour résoudre les équations linéaires ainsi obtenues

8. Dispositif selon la revendication 7, **caractérisé en ce qu'**il comporte :

- des moyens pour déterminer l'évolution relative $\Delta Hi$ des horloges de l'émetteur pseudolite (1) et de l'unité (4) de traitement des moyens de radiolocalistion entre le $i^{ème}$ point ($P_1$) où l'antenne (3) est successivement positionnée et le point ($P_{i-1}$) précédent,
- des moyens de calcul de la valeur de phase

$$R'_i = R_i - \sum_{j=1}^{i} \Delta Hj$$

où $R_i$ est la mesure de phase du signal pseudolite en ce point ($P_1$), les valeurs $\Delta Hj$ des évolutions relatives aux points ($P_1$ $P_J$) précédents ayant à cet effet été mémorisées,
- des moyens de calcul des paramètres Ki, ai, bi, ci, di de l'équation linéaire

$$(1) \qquad R_i'^2 - R_0^2 + Ki = aiX + biY + ciZ + diH_0,$$

où X, Y, Z sont les coordonnées du point masqué (P),
$H_0$ est le déphasage entre l'émetteur pseudolite (1) et le mobile de radiolocalisation en un temps $T_0$ de référence,
ai, bi, ci, di étant respectivement égux à 2 ($X_i - X_0$), 2 ($Y_1-Y_0$), 2 ($Z_1 - Z_0$), 2 ($R'_1 - R_0$),
où $X_i$, $Y_i$, $Z_i$ sont les coordonnées du point $P_i$,
$X_0$, $Y_0$, $Z_0$ les coordonnées du point $P_0$ où se trouve l'antenne (3) à l'instant de référence,
$R_0$ étant la mesure de phase du signal pseudolite à l'instant de référence,
Ki étant égal à $X_0^2 - X_i^2 + Y_0^2 - Y_i^2 + Z_0^2 - Z_i^2$.

9. Dispositif selon la revendication 8, **caractérisé en ce que** les moyens pour déterminer l'évolution relative des horloges de l'émetteur pseudolite (1) et de l'unité (4) de traitement comportent des moyens de soustraction de l'évolution d'horloge entre l'unité (4) de traitement et une balise de référence (5) et de l'évolution d'horloge entre cette balise de référence (5) et l'émetteur pseudolite (1).

10. Dispositif selon l'une des revendications 7 à 9, **caractérisé en ce qu'**il comporte des moyens pour réaliser un test de stabilité sur les valeurs (X, Y, Z) successivement déterminées pour les coordonnées du point à localiser (P).

**Claims**

1. A method of radio satellite localization of points on the surface of the earth, in which, to locate a masked point where the reception of signals transmitted by satellites in insufficient:

   - the antenna (3) of a radio localization mobile receiver capable of moving freely in the vicinity of the masked point is positioned on a plurality of arbitrary points ($P_i$) where the signals transmitted by the satellites are received satisfactorily;
   - the coordinates of said points ($P_i$) are determined by radio localization; and
   - the coordinates of the masked point (P) are determined as a function of said coordinates;

   the method being **characterized in that**, for this purpose,

   - a pseudolite transmitter (1) is placed at the masked point (P);
   - at each of the points ($P_i$) where the mobile receiver antenna (3) is successively positioned, the phase of the signal transmitted by the pseudolite transmitter (1) and received at said points by said antenna (3) is measured;
   - for each point ($P_i$) where the antenna (3) is successively positioned, the parameters are determined, as a function of the phase measurement of the pseudolite signal ($S_P$) and of the coordinates of said point ($P_i$), of a linear equation relating the coordinates of the masked point (P) and the phase shift between the pseudolite transmitter (1) and the radio localization mobile receiver at a reference time ($T_0$); and
   - once a sufficient number of measurements have been disposed, the coordinates of the masked point (P) are determined by inverting the equations.

2. A method according to claim 1, **characterized in that** for the ith point $(P_i)$ where the antenna (3) is successively positioned:

- · the relative phase slip $\Delta H_i$ of the clocks of the pseudolite transmitter (1) and of the processing unit (4) of the radio localization mobile receiver that occurs between said point $(P_i)$ and the preceding point $(P_{i-1})$ is determined;
- · the following phase value is computed

$$R'_i = R_i - \sum_{j=1}^{i} \Delta H_j$$

where $R_i$ is the measured phase of the pseudolite signal $(P_s)$ at said point $(P_i)$, and the relative slip values $\Delta H_j$ relating to preceding points $(P_j)$ having been stored for this purpose; and
- · the parameters Ki, ai, bi, ci, and di of the following linear equation are computed:

$$(1) \qquad R'^2_i - R_0^2 + Ki = aiX = biY + ciZ + diH_0$$

where X, Y, and Z are the coordinates of the masked point (P),
$H_0$ is the phase shift between the pseudolite transmitter (1) and the radio localization mobile receiver at the reference time $(T_0)$,
ai, bi, ci, and di are respectively equal to
$2(X_i - X_0)$, $2(Y_i - Y_0)$, $2(Z_i - Z_0)$, and $2(R'_i - R_0)$,
where $X_i$, $Y_i$, and $Z_i$ are the coordinates of point $(P_i)$,
$X_0$, $Y_0$, and $Z_0$ are the coordinates of the point $P_0$ where the antenna (3) is located at the reference time,
$R_0$ being the phase measurement of the pseudolite signal at the reference time, and
where Ki is equal to $X_0^2 - X_i^2 + Y_0^2 - Y_i^2 + Z_0^2 - Z_i^2$.

3. A method according to claim 2, **characterized in that** the relative slip between the clocks of the pseudolite (1) and of the processing unit (4) of the radio localization mobile receiver is determined by taking the difference between:

- · the clock slip between said unit (4) and a reference beacon (5); and
- · the clock slip between said reference beacon (5) and the pseudolite transmitter (1).

4. A method according to claim 3, **characterized in that** the clock slip is measured by the reference beacon (5) and relayed to the mobile unit (4).

5. A method according to claim 3, **characterized in that** the clock slip is cancelled by servo-controlling the clock of the pseudolite transmitter (1) on the clock of the reference beacon (5), said servo-control using modulation of the carrier transmitted by said beacon.

6. A method according to any preceding claim, **characterized in that** a stability test is performed on the successively determined values (X, Y, Z) for the coordinates of the point to be localized (P), with radio localization being terminated when the stability of said values is satisfactory.

7. Apparatus for radio satellite localization of points on the surface of the earth, the apparatus comprising a radio localization mobile receiver (2) including both an antenna (3) for receiving radio signals (S) transmitted to the earth by a constellation of satellites (GPS), and a unit (4) for processing said signals, the apparatus being **characterized in that** it further includes a pseudolite transmitter (1) designed to be placed on a masked point (P) where the reception of signals emitted by the satellites is unsatisfactory, one of the channels of the radio localization mobile receiver (2) that is usually dedicated to receiving radio satellite signals (S) being allocated to receiving the signal $(S_P)$ transmitted by the pseudolite transmitter (1), said apparatus including processing means (4) enabling the coordinates of the masked point (P) to be determined as a function firstly of the measured phase of the signal transmitted by the pseudolite transmitter (1) at various points ($P_i$) where the antenna (3) is successively positioned, and secondly on the basis of the coordinates of said points ($P_i$) as determined by the unit (4), the processing means (4) comprising:

- computing means for determining, for each point ($P_i$) at which the antenna (3) is successively positioned, the parameters of a linear equation relating the coordinates of the masked point (P) and the phase shift between the pseudolite transmitter (1) and the radio localization mobile receiver (2) at a reference time ($T_0$), said parameters being a function of the measured phase of the pseudolite signal ($P_S$) and of the coordinates of said point ($P_i$); and
- computing means for solving the linear equations obtained in this way.

8. Apparatus according to claim 7, **characterized in that** it includes:

- means for determining the relative slip $\Delta H_i$ between the clocks of the pseudolite transmitter (1) and of the processing unit (4) of the radio localization means between the ith point ($P_i$) where the antenna (3) is successively positioned and the preceding point ($P_{i-1}$);
- means for computing the following phase value

$$R'_i = R_i - \sum_{j=1}^{i} \Delta H_j$$

where $R_i$ is the measured phase of the pseudolite signal at said point ($P_i$), with the values $\Delta H_j$ for relative slip relating to preceding points ($P_i$, $P_j$) having been stored for this purpose; and
- means for computing parameters Ki, ai, bi, ci, and di for the following linear equation

$$(1) \qquad R'^2_i - R_0^2 + Ki = aiX = biY + ciZ + diH_0$$

where X, Y, and Z are the coordinates of the masked point (P),
$H_0$ is the phase shift between the pseudolite transmitter (1) and the radio localization mobile receiver at a reference time $T_0$,
ai, bi, ci, and di being respectively equal to
$2(X_i - X_0)$, $2(Y_i - Y_0)$, $2(Z_i - Z_0)$, and $2(R'_i - R_0)$,
where $X_j$, $Y_i$, and $Z_j$ are the coordinates of point ($P_i$),
$X_0$, $Y_0$, and $Z_0$ are the coordinates of the point $P_0$ where the antenna (3) is located at the reference time,
$R_0$ being the phase measurement of the pseudolite signal at the reference time, and
where Ki is equal to $X_0^2 - X_i^2 + Y_0^2 - Y_i^2 + Z_0^2 - Z_i^2$.

9. Apparatus according to claim 8, **characterized in that** the means for determining relative slip between the clocks of the pseudolite transmitter (1) and of the processing unit (4) include means for taking the difference between clock slip between the processing unit (4) and a reference beacon (5), and clock slip between said reference beacon (5) and the pseudolite transmitter (1).

10. Apparatus according to any one of claims 7 to 9, **characterized in that** it includes means for testing the stability of the values (X, Y, Z) successively determined for the coordinates of the point to be located (P).

**Patentansprüche**

1. Verfahren zur Satellitenfunkortung von Punkten auf der Erdoberfläche, bei dem man zum Orten eines abgeschirmten Punktes, an dem der Empfang der von den Satelliten ausgesandten Signale unzureichend ist,

- die Antenne (3) eines beweglichen Funkortungskörpers, der sich frei in der Nähe des abgeschirmten Punktes bewegt, an eine Vielzahl von beliebigen Punkten ($P_i$) bringt, an denen der Empfang der von den Satelliten ausgesandten Signale ausreichend ist,

- durch Funkortung die Koordinaten dieser Punkte $(P_i)$ bestimmt und
- in Abhängigkeit von diesen Koordinaten die Koordinaten des abgeschirmten Punktes (P) bestimmt, dadurch gekennzeichent dass man hierzu
- einen Pseudosatellitensender (1) an dem abgeschirmten Punkt (P) anordnet,
- an jedem der Punkte $(P_i)$, an denen die Antenne (3) nacheinander angeordnet wird, die Phase des Signals misst, das vom Pseudosatellitensender (1) ausgesandt und an diesen Punkten von der Antenne (3) empfangen wird,
- für jeden Punkt $(P_i)$, an dem die Antenne (3) nacheinander angeordnet wird, in Abhängigkeit von dem Messwert der Phase des Pseudosatellitensignals $(S_p)$ und den Koordinaten an dem besagten Punkt $(P_i)$ die Parameter einer linearen Gleichung bestimmt, die die Koordinaten des abgeschirmten Punktes (P) und die Phasenverschiebung zwischen dem Pseudosatellitensender (1) und dem beweglichen Funkortungskörper zu einem Bezugszeitpunkt $(T_0)$ in Beziehung setzt, und
- dann, wenn man eine ausreichende Anzahl von Messungen hat, die Koordinaten des abgeschirmten Punktes (P) durch Umkehr dieser Gleichungen bestimmt.

2. Verfahren nach Anspruch 1, **dadurch gekennzeichnet** dass man für den i-ten Punkt $(P_i)$, an dem die Antenne (3) nacheinander angeordnet wird,

- die relative Änderung Hi der Zeitbasis des Pseudosatellitensenders (1) und einer Verarbeitungseinheit (4) des beweglichen Funkortungskörpers zwischen dem Punkt $(P_i)$ und dem vorhergehenden Punkt $(P_{i-1})$ bestimmt,
- den Phasenwert

$$R'_1 = R_1 - \sum_{j=1}^{i} \Delta Hj$$

berechnet, wobei $R_i$ der gemessene Wert der Phase des Pseudosatellitensignals $(P_s)$ an diesem Punkt $(P_i)$ ist und die Werte $\Delta Hj$ der relativen Änderungen an den vorhergehenden Punkten $(Pj)$ zu diesem Zweck gespeichert sind,
- die Parameter Ki, ai, bi, ci, di der folgenden linearen Gleichung:

$$(1) \qquad R'^2_1 - R^2_0 + Ki = aiX + biY + ciZ + diH_0,$$

berechnet, wobei X, Y und Z die Koordinaten des abgeschirmten Punktes (P) sind, $H_0$ die Phasenverschiebung zwischen den Pseudosatellitensender (1) und dem beweglichen Funkortungskörper zum Bezugszeitpunkt $(T_0)$ ist, ai, bi, ci, di jeweils gleich $2(X_i-X_0)$, $2(Y_i-Y_0)$, $2(Z_i-Z_0)$, $2(R'_i-R_0)$ sind, wobei $X_i$, $Y_i$, $Z_i$ die Koordinaten des Punktes $(P_i)$ sind, $X_0$, $Y_0$, $Z_0$ die Koordinaten des Punktes $P_0$ sind, an dem sich die Antenne zum Bezugszeitpunkt befindet, $R_0$ der gemessene Phasenwert des Pseudosatellitensignals zum Bezugszeitpunkt ist und $K_i$ gleich $X_0^2-X_i^2+Y_0^2-Y_i^2+Z_0^2-Z_i^2$ ist.

3. Verfahren nach Anspruch 2, **dadurch gekennzeichnet**, dass man die relative Änderung der Zeitbasis des Pseudosatellitensenders (1) und der Verarbeitungseinheit (4) für den beweglichen Funkortungskörper durch Subtraktion

- der Änderung der Zeitbasis zwischen der besagten Einheit (4)und einer Bezugsbake (5) und
- der Änderung der Zeitbasis zwischen dieser Bezugsbake (5) und dem Pseudosatellitensender (1) bestimmt.

4. Verfahren nach Anspruch 3, **dadurch gekennzeichnet**, dass die Änderung der Zeitbasis durch die Bezugsbake (5) gemessen und zur beweglichen Einheit (4) übertragen wird.

5. Verfahren nach Anspruch 4, **dadurch gekennzeichnet**, dass die Änderung der Zeitbasis durch Steuern der Zeitbasis des Pseudosatellitensenders (1) auf die der Bezugsbake (5) aufgehoben wird, welche Steuerung eine Modulation des Trägers verwendet, der von der besagten Bake ausgesandt wird.

6. Verfahren nach einem der vorhergehenden Ansprüche, **dadurch gekennzeichnet**, dass man an den nacheinander für die Koordinaten des zu ortenden Punktes (P) bestimmten Werten (X,Y,Z) eine Stabilitätsprüfung durchführt, wobei die Funkortung beendet wird, wenn die Stabilität der Werte ausreichend ist.

7. Vorrichtung zur Satellitenfunkortung von Punkten auf der Erdoberfläche mit einem beweglichen Funkortungskörper (2), der eine Antenne (3) zum Empfangen von Funktsignalen (S) umfasst, die von einer Satellitenkonstellation (GPS) in Richtung auf die Erde ausgesandt werden, und einer Einheit (4) zum Verarbeiten dieser Signale, welche Vorrichtung **dadurch gekennzeichnet** ist, dass sie weiterhin einen Pseudosatellitensender (1) umfasst, der dazu bestimmt ist, an einem abgeschirmten Punkt (P) angeordnet zu werden, an dem der Empfang der von den Satelliten ausgesandten Signale unzureichend ist, wobei einer der Kanäle des beweglichen Funkortungskörper (2), der üblicherweise dem Emfang der Satellitenfunksignale (S) zugeeignet ist, für den Empfang des Signales ($S_P$) bestimmt ist, das vom Pseudosatellitensender (1) ausgesandt wird, die Vorrichtung Verarbeitungseinrichtungen (4) umfasst, die es erlauben, die Koordinaten des abgeschirmten Punktes (P) in Abhängigkeit einerseits von dem gemessenen Wert der Phase des Signals, das vom Pseudosatellitensender (1) an verschiedenen Punkten ($P_i$) ausgesandt wird, an denen die Antenne (3) nacheinander angeordnet wird, und anderseits den Koordinaten von der Einheit (4) der bestimmten Punkte ($P_i$) zu bestimmen, und die Verarbeitungseinrichtungen (4)

- Recheneinrichtungen zum für jeden Punkte ($P_i$), an dem die Antenne (3) nacheinander angeordnet wird, Bestimmen der Parameter einer linearen Gleichung, die die Koordinaten des abgeschirmten Punktes (P) und die Phasenverschiebung zwischen dem Pseudosatellitensender (1) und dem beweglichen Funkortungskörper (2) zu einem Bezugszeitpunkt ($T_0$) in Beziehung bringt, welche Parameter eine Funktion des gemessenen Wertes der Phase des Pseudosatellitsignals ($P_s$) und der Koordinaten dieses Punktes ($P_i$) sind, und
- Recheneinrichtungen zum Auflösen der in dieser Weise erhaltenen linearen Gleichungen umfassen.

8. Vorrichtung nach Anspruch 7, **dadurch gekennzeichnet**, dass sie

- Einrichtungen zum Bestimmen der relativen Änderung $\Delta Hi$ der Zeitbasis des Pseudosatellitensenders (1) und der Verarbeitungseinheit (4) der Funkortungseinrichtungen zwischen dem i-ten Punkt ($P_i$), an dem die Antenne (3) nacheinander angeordnet wird, und dem vorhergehenden Punkt ($P_{i-1}$)
- Einrichtungen zum Berechnen des Wertes der Phase

 wobei ($R_i$) der gemessene Wert der Phase des Pseudosatellitensignals an diesem Punkt ($P_i$) ist, und die Werte $\Delta Hj$ der relativen Änderungen an den vorhergehenden Punkten ($P_i$, $P_j$) zu diesem Zweck gespeichert sind, und
- Einrichtung zum Berechnen der Parameter Ki, ai, bi, ci, di der linearen Gleichung

$$R'_1 = R_1 - \sum_{j=1}^{i} \Delta Hj$$

 umfassen, wobei X,Y, Z die Koordinaten des abgeschirmten Punktes (P) sind, ($H_0$) die Phasenverschiebung zwischen dem Pseudosatellitensender (1) und dem beweglichen Funkortungskörper zum Bezugszeitpunkt ($T_0$) ist,
 ai, bi, ci, di jeweils gleich $2(X_i-X_0)$, $2(Y_i-Y_0)$, $2(Z_i-Z_0)$, $2(R'_i-R_0)$ sind,
 wobei Xi, Yi, Zi die Koordinaten des Punktes $P_i$ sind, $X_0, Y_0, Z_0$ die Koordinaten des Punktes $P_0$ sind, wo sich die Antenne (3) zum Bezugszeitpunkt befindet, $R_0$ der gemessene Wert der Phase des Pseudosatellitensignals zum Bezugszeitpunkt ist und
 $K_i$ gleich $X_0^2-X_i^2+Y_0^2-Y_i^2+Z_0^2-Z_i^2$ ist.

9. Vorrichtung nach Anspruch 8, **dadurch gekennzeichnet**, dass die Einrichtungen zum Bestimmen der relativen Änderung der Zeitbasis des Pseudosatellitensenders (1) und der Verarbeitungseinheit (4) Subtraktionseinrichtungen für die Änderung der Zeitbasis zwischen der Verarbeitungseinheit (4) und einer Bezugsbarke (5) und der Änderung der Zeitbasis zwischen dieser Bezugsbake (5) und dem Pseudosatellitensender (1) umfassen.

10. Vorrichtung nach einem der Ansprüche 7 bis 9, **dadurch gekennzeichnet**, dass sie Einrichtungen zum Durchführen einer Stabilitätsprüfung an den Werten (X, Y, Z) umfasst, die der Reihe nach für die Koordinaten des zu ortenden Punktes (P) bestimmt werden.

FIG_1